# EUROPEAN PATENT APPLICATION

(11) **EP 4 585 878 A1**
(43) Date of publication of application: **16.07.2025**
(21) Application number: 23869767.6
(22) Date of filing: 26.06.2023
(51) Int. Cl.: F28D 7/02

(54) **HEAT EXCHANGE ASSEMBLY FOR HYDROGENATION DEVICE, AND HEAT EXCHANGE PROCESS**

(30) Priority: 30.09.2022 CN 202211208321
(71) Applicant: Zhenhai Petrochemical Jianan Engineering Co., Ltd., Ningbo, Zhejiang 315207 (CN)
(72) Inventor: TAO, Jiang, Ningbo, Zhejiang 315207 (CN); ZHANG, Xianan, Ningbo, Zhejiang 315207 (CN); WANG, Jianliang, Ningbo, Zhejiang 315207 (CN); WANG, Li, Ningbo, Zhejiang 315207 (CN); HU, Xingmiao, Ningbo, Zhejiang 315207 (CN); WANG, Yan, Ningbo, Zhejiang 315207 (CN); XU, Weidong, Ningbo, Zhejiang 315207 (CN)
(74) Representative: Meyer-Dulheuer MD Legal Patentanwälte PartG mbB
(86) International application number: PCT/CN2023/102257
(87) International publication number: WO 2024/066519

(57) **Abstract**

The first heat exchanger comprises a shell vertically arranged and one or more spiral heat exchange tubes; the shell has a first shell passage inlet pipe at the lower portion of the shell, the first shell passage inlet pipe connects to a hydrogen pipe for transporting hydrogen, the shell has a second shell passage inlet pipe at the middle portion of the shell the second shell passage inlet pipe connects to a raw oil pipe for transporting raw oil, the shell has a shell passage outlet pipe on the upper portion of the shell; the shell has one or more tube passage inlet pipes, each of which communicates with a top of the corresponding spiral heat exchange tube and connects to a hot high fraction gas pipe for transporting a hot high fraction gas output by a hot high-pressure separation tank of the hydrogenation device; the shell has a tube passage outlet pipe. The present invention further discloses a heat exchange process. Compared with the prior art, the heat exchange assembly improves the heat exchange efficiency.

## Description

### BACKGROUND

### Technical Field

The present invention relates to a field of heat exchange, and in particular to a heat exchange assembly for hydrogenation device and heat exchange process.

### Description of Related Art

A Chinese patent application CN113063309A (Application No.: CN202110477804.0) disclosed a hydrogenation heat exchange system using heat exchanger with multiple-stream winding pipe and heat exchange process, and a Chinese patent application CN113091498A (Application No.: CN202110477849.8) disclosed a hydrogenation heat exchange system using heat exchanger with multiple-stream winding pipe and heat exchange process. In the existing hydrogenation devices disclosed in aforementioned patent application and the like, the raw oil for reaction is mixed with hydrogen and then fed into the heat exchanger to exchange heat with hot high fraction gas, thereby increasing the temperature of the raw gas and hydrogen.

In the prior art, the heat exchange process after mixing the raw oil with the hydrogen has the following technical problems which should be solved:
1. The mixture of the raw oil and the hydrogen enters the heat exchanger from the bottom of the heat exchanger, and a flow speed on the bottom of the heat exchanger is relatively low. Moreover, the raw oil is the liquid phase, and the hydrogen is the gas phase. Since a specific gravity of the liquid phase is obviously greater than that of the gas phase, the gas-liquid separation will be occurred, and a large amount of liquid is eventually accumulated on the bottom of the device.
2. Since the temperature of the raw oil is generally higher than that of the hydrogen, when the temperature of the mixture after mixing the raw oil with the hydrogen is higher than the heat of the hot high fraction gas in a low-temperature section in the heat exchanger, the heat of the hot high fraction gas in the low-temperature section in the heat exchanger cannot be effectively utilized, resulting in low heat exchange efficiency.

Moreover, the existing heat exchange assembly for hydrogenation device has the following technical problems:
1. When the high-pressure hot high fraction gas exchanges heat with a low-pressure hot water, the hot high fraction gas may leak into the low-pressure hot water, thus bringing safety hazards to the subsequent water system and utility system.
2. The high-pressure air cooler has the problems of low cooling efficiency, high space occupancy, high cost, a larger number of leakage points and the like.

### SUMMARY

A first technical problem to be solved by the present invention is to provide a heat exchange assembly for hydrogenation device so as to improve the heat exchange efficiency and reduce the risk of gas-liquid separation.

A second technical problem to be solved by the present invention is to provide a heat exchange assembly for hydrogenation device so as to reduce the risk of high fraction gas leakage.

A third technical problem to be solved by the present invention is to provide a heat exchange assembly for hydrogenation device so as to improve the heat exchange effect of an air cooler.

A fourth technical problem to be solved by the present invention is to provide a heat exchange process using the above heat exchange assembly.

To solve the first technical problem, the heat exchange assembly for hydrogenation device comprises a first heat exchanger; wherein, the first heat exchanger comprises a shell vertically arranged and one or more spiral heat exchange tubes vertically disposed inside the shell; the shell has a top portion, an upper portion, a middle portion, a lower portion and a bottom portion on a periphery of the shell;
the shell has a first shell passage inlet pipe at the lower portion of the shell, a second shell passage inlet pipe at the middle portion of the shell and a shell passage outlet pipe on the upper portion of the shell, the first shell passage inlet pipe connects to a hydrogen pipe for transporting hydrogen, the second shell passage inlet pipe connects to a raw oil pipe for transporting raw oil; and
the shell has one or more tube passage inlet pipes, each of which communicates with a top of the corresponding spiral heat exchange tube and connects to a hot high fraction gas pipe for transporting a hot high fraction gas output by a hot high-pressure separation tank of the hydrogenation device; the shell has a tube passage outlet pipe which communicates with a bottom of each spiral heat exchange tube at the bottom portion of the shell.

In the present invention, the "hydrogen" can be the circulating hydrogen output from the hydrogenation device (the circulating hydrogen may contain impurities) or the hydrogen directly from the outside.

In order to improve the heat exchange effect, preferably, the spiral heat exchange tube can be a single-stream heat exchange tube or a double-stream heat exchange tube or the like. Preferably, the one or more spiral heat exchange tubes are double-stream heat exchange tubes composed of a first stream heat exchange tube and a second stream heat exchange tube, the number of the tube passage inlet pipes is two, a first tube passage inlet pipe communicates with a top of the first stream heat exchange tube and a second tube passage inlet pipe communicates with a top of the second stream heat exchange tube; and

the hot high fraction gas pipe comprises a main pipe and two branch pipes, an input end of the main pipe connects to a hot high-pressure separation tank of the hydrogenation device, and an output end of the main pipe communicates with an input end of each of the two branch pipes, an output end of each branch pipe communicates with the corresponding tube passage inlet pipe.

Preferably, a first valve for controlling gas flow is arranged on each branch pipe, each branch pipe connects to a water injection pipe for transporting water, and a second valve for controlling fluid flow is arranged on each water injection pipe. In this way, it is possible to control the on or off of the first and second valves according to the actual working condition.

Further, the junctions of the water injection pipes and the branch pipes are located downstream or upstream of the first valves along a flowing direction of the high fraction gas in the branch pipes.

Preferably, the number of the tube passage outlet pipes is one, and the tube passage outlet pipe communicates with the bottom of the first stream heat exchange tube and the second stream heat exchange tube.

In order to improve the heat exchange efficiency, preferably, each spiral heat exchange tube of the first heat exchanger has a vertically extending spiral section and a first and a second straight tube sections, the spiral section has a top end and a bottom end, the first straight tube section communicates with the top end of the spiral section and the second straight tube section communicates with the bottom end of the spiral section; and
a vertical distance between the second shell passage inlet pipe of the first heat exchanger and the bottom end of the spiral section is denoted by H1, and a vertical distance between the top end and bottom end of the spiral section is denoted by H2, where 1/4≤H1:H2≤1/3.

In other words, if the position of the second shell passage inlet pipe is too high, the heat exchange between the raw oil and the medium in the heat exchange tube will be affected; and, if the position of the second shell inlet passage pipe is too low, the problem of gas-liquid separation may be caused. In the present invention, on a condition of 1/4≤H1:H2≤1/3, the heat exchange efficiency can be ensured and the risk of gas-liquid separation can be better reduced.

Preferably, the first shell passage inlet pipe of the first heat exchanger locates blow the bottom end of the spiral section, the shell passage outlet pipe locates over the top end of the spiral section.

In the above technology, in order to increase the feed temperature of the hydrogenation reactor and improve the utilization of energy, preferably, the heat exchange assembly further comprises a fifth heat exchanger comprising a fifth hot medium passage and a fifth cold medium passage, an inlet end of the fifth hot medium passage connects to a product pipe for transporting a reaction product output by the hydrogenation reactor of the hydrogenation device, while an output end thereof connects to an input end of the hot high pressure separation tank of the hydrogenation device, and, an input end of the fifth cold medium passage communicates with the shell passage outlet pipe of the first heat exchanger, while an output end thereof connects to an input end of the hydrogenation reactor.

Preferably, the output end of the fifth cold medium passage communicates with the input end of the hydrogenation reactor through a third pipe, the heat exchange assembly further comprises a fifth bypass pipe with two ends, a first end of the fifth bypass pipe communicates with the third pipe and a second end thereof communicates with the raw oil pipe, and a valve for controlling a flow in the first bypass pipe is arranged on the first bypass pipe. In this way, when the temperature of the medium output from the output end of the fifth cold medium passage is high, the low-temperature raw oil can be fed into the third pipe so as to adjust the temperature of the medium by opening the first bypass pipe.

Preferably, a heating furnace for heating a fluid medium is arranged on the third pipe, the heat exchange assembly further comprises a second bypass pipe, an input end of the second bypass pipe communicates with the output end of the fifth cold medium passage and an output end of the second bypass pipe connects to the input end of the hydrogenation reactor, and, valves for controlling the flow are arranged on the second bypass pipe and the third pipe, respectively. When the temperature of the medium output from the output end of the fifth cold medium passage reaches the feed temperature of the hydrogenation reactor, the medium can directly pass through the second bypass pipe, and it is unnecessary to use the heating furnace, so that the consumption of energy is reduced. The heating furnace can be used in the start-up stage (i.e., in the stage when the hydrogenation device starts to operate).

In the above technology, in order to further utilize the heat of the hot high fraction gas after heat exchange by the first heat exchanger, the heat exchange assembly further comprises a second heat exchanger comprising a second hot medium passage and a second cold medium passage, an input end of the second hot medium passage communicates with the tube passage outlet pipe of the first heat exchanger, and an input end of the second cold medium passage connects to a cold low fraction oil pipe for transporting a cold low fraction oil.

Preferably, the heat exchange assembly further comprises a third heat exchanger comprising a third hot medium passage and a third cold medium passage, an input end of the third hot medium passage communicates with an output end of the second hot medium passage of the second heat exchanger, and an input end of the third cold medium passage connects to a water supply pipe for transporting water.

The water in the water supply pipe can be low pressure water or high pressure water. After heat exchange, the low pressure water can be directly used for home heating or the like. However, due to the low pressure of the low pressure water and the high pressure of the hot high fraction gas that exchanges heat with the low pressure water, there is a large difference in pressure between the both, so that the risk of water pollution due to leakage between the cold and hot medium passages of the third heat exchanger is caused. Therefore, To solve the second technical problem, preferably, the water supply pipe is used for transporting the high pressure water; and
the heat exchange assembly further comprises a fourth heat exchanger comprising a fourth hot medium passage and a fourth cold medium passage, an input end of the fourth hot medium passage communicates with an output end of the third hot medium passage of the third heat exchanger, and an input end of the fourth cold medium passage is connected to a low pressure water pipe for transporting low pressure water. In this way, the heat exchange between the high pressure water and the hot high fraction gas in the third hot medium passage can balance the pressure in the third heat exchanger and reduce the risk of water pollution caused by pressure imbalance. Specifically, the pressure of the high pressure water is higher than that of the hot high fraction gas, and the high pressure water is finally injected into the hot high fraction gas even if the high pressure water leaks into the hot high fraction gas. In other words, the hot pressure water will not cause water pollution no matter whether it leaks into the hot high fraction gas or the low pressure water. Moreover, by arranging the fourth heat exchanger, the low pressure water can be heated, and the heated low pressure water can be used for home heating or the like. In addition, even if the high pressure water leaks into the low pressure water in the fourth heat exchanger, since the both mediums are water, no water pollution is caused.

Preferably, an output end of the fourth hot medium passage of the fourth heat exchanger communicates with the hot high fraction gas pipe;
the tube passage outlet pipe of the first heat exchanger communicates with the input end of the second hot medium passage of the second heat exchanger through a first pipe, and the first pipe communicates with the output end of the fourth hot medium passage of the fourth heat exchanger; and
the output end of the second hot medium passage of the second heat exchanger communicates with the input end of the third hot medium passage of the third heat exchanger through a second pipe, and the second pipe communicates with the output end of the fourth hot medium passage of the fourth heat exchanger.

Thus, the fourth heat exchanger also realizes the water injection of the pipe for transporting the hot high fraction gas, without additionally providing a water injection pipe. The water can dissolve some mediums such as hydrogen sulfide and ammonium salt in the hot high fraction gas, so as to reduce the possibility of occurring a situation that some mediums in the hot high fraction gas corrode the heat exchanger.

Preferably, the heat exchange assembly further comprises an air cooler, an inlet of the air cooler communicates with an output end of the third hot medium passage of the third heat exchanger and an outlet of the air cooler connects to an inlet of a cold high pressure separation tank of the hydrogenation device.

To solve the third technical problem, preferably, the air cooler comprises:
a shell passage housing arranged vertically and having an air inlet and an air outlet respectively at a bottom and a top of the shell passage housing;
two tube plates disposed on a periphery of the shell passage housing, one above the other;
two tube boxes respectively disposed on one corresponding tube plate;
a center cylinder vertically arranged inside the shell passage housing;
a plurality of heat exchange tubes each having two ends;
a plurality of spray tubes each having an upper end and a lower end;
wherein, the plurality of heat exchange tubes is disposed inside the shell passage housing along an axis of the shell passage housing and each heat exchange tube is spirally wound around the center cylinder to form a multiple-layer spiral tube, two ends of each heat exchange tube are respectively supported on the corresponding tube plate and communicate with the corresponding tube box; and
the plurality of spray tubes is disposed inside the shell passage housing wound in each layer of the spiral tube along a spiral direction of the heat exchange tubes, each spray tube has a liquid inlet at a bottom of the spray tube and a liquid outlet opened downward at a top of the spray tube, the liquid outlets are located above the spiral tube and arranged at regular intervals along a circumference of the shell passage housing; each spray tube has a plurality of spray holes on a wall of each spray tube, each spray hole faces a wall of an adjacent heat exchange tube.

In this way, when the air cooler operates, a cooling liquid is fed into the spray tubes, and the cooling liquid enters the spray tubes from the liquid inlets. A part of the cooling liquid is sprayed to the adjacent heat exchange tube through the spray holes, while a part of the cooling liquid is sprayed downward from the liquid outlets, thereby realizing the heat exchange of the high-temperature hot medium in the heat exchange tubes. In addition, the liquid outlets arranged at regular intervals along a circumference of the shell passage housing can ensure uniform water spraying, stabilize the water spraying amount, and effectively improve the heat exchange efficiency.

Preferably, a nozzle is arranged on each liquid outlet.

In the above scheme, preferably, the shell passage housing has a water collection tank on a bottom of the shell passage housing, the liquid inlet of each spray tube communicates with the water collection tank through a water pump.

Preferably, the shell passage housing has an upper end and a lower end, the shell passage housing has the air inlet at a surface of the lower end of the shell passage housing, and the air outlet at a surface of the upper end of the shell passage housing.

In order to improve the utilization of water in the water collection tank, preferably, the heat exchange assembly further comprises a water collector which is arranged in the shell passage housing and located above the water outlets of the spray tubes, and the water collector has a plurality of passages which allow a gas flow to pass upward and can collect water in the gas flow. In this way, the consumption of water can be reduced.

Preferably, the water collector comprises a plurality of water collection plates which are arranged vertically and connected to each other, the water collection plates are arranged at regular intervals in a horizontal direction, and each passage is formed between the surfaces of two adjacent water collection plates, sheets extending upward protrude from the surface of each water collection plate, and, the water collector has a plurality of collection channels between the sheets and the surface of each water collection plate which open upward for collecting accumulated water on the surfaces of the water collection plates above the sheets.

In order to better recycle water in the collection channels, the water collector further comprises a collection groove which is formed in a center of the water collector, and each collection channel extends from an inner surface of the shell passage housing to the collection groove along surfaces of the water collection plates and communicates with the collection groove; and
the water collector is sleeved on a periphery of the center cylinder, and the center cylinder passes through the collection groove, the center cylinder is a hollow tube with a lower end, and the lower end communicates with the water collection tank, the center cylinder has a water inlet communicating with the collection groove on a periphery of the center cylinder.

In order to ensure the gas-water separation effect without affecting the heat exchange of the air cooler, preferably, a distance between two adjacent water collection plates is 20 mm to 50 mm.

In order to better collect water in the collection channels, preferably, the water collector comprises a plurality of water collection plates which are arranged vertically and connected to each other, the water collection plates are arranged at regular intervals around the center cylinder, and each passage is formed between the surfaces of two adjacent water collection plates, sheets extending upward protrude from the surface of each water collection plate, and, the water collector has a plurality of collection channels between the sheets and the surface of each water collection plate which open upward for collecting accumulated water on the surfaces of the water collection plates above the sheets, each collection channel extends from an inner surface of the shell passage housing to the center cylinder along surfaces of the water collection plates; the center cylinder is a hollow tube with a lower end, and the lower end communicates with the water collection tank, the center cylinder has a water inlet communicating with the collection channels on a periphery of the center cylinder.

In order to enable the water in the collection channels to better flow into the water collection tank, preferably, the collection channels are inclined downward from outside to inside.

In order to improve the gas-water separation effect and better collect water, preferably, each water collection plate is wave-shaped and has one or more protruded portions and one or more recesses, the water collection plate has at least one collection channel on each surface of each water collection plate, and the at least one collection channel is located at the protruded portion of each water collection plate.

In the above schemes, the heat exchange tubes have smooth surfaces. In order to improve the heat exchange effect, preferably, the heat exchange tube is a corrugated tube, and has one or more smooth tube sections with smooth surfaces and one or more corrugated sections with corrugated surfaces, the corrugated sections and the smooth tube sections are alternately arranged lengthwise of the heat exchange tube, and, the corrugated sections are longer than the smooth tube sections;
or, the heat exchange tube is a finned tube, and has one or more smooth tube sections with smooth surfaces and one or more finned sections with finned surfaces, the finned sections and the smooth tube sections are alternately arranged lengthwise of the heat exchange tube, and, the finned sections are longer than the smooth tube sections.

Preferably, the aforementioned two tube plates and two tube boxes form one group, and at least two groups are arranged at regular intervals around the shell passage housing. Of course, there may be only one group arranged at regular intervals around the shell passage housing, depending on the number of the heat exchange tubes.

To solve the fourth technical problem, the heat exchange process using the above heat exchange assembly has the following steps:
the hot high fraction gas with a pressure of 9 MPa to 11.5 MPa and a temperature of 230°C to 250°C output from the hot high pressure separation tank enters the spiral heat exchange tube of the first heat exchanger through the tube passage inlet pipe, and the hydrogen with a pressure of 10 MPa to 12.5 MPa and a temperature of 70°C to 95°C and the raw oil with a pressure of 11 MPa to 13.5 MPa and a temperature of 130°C to 165°C enter the shell through the first shell passage inlet pipe and the second shell passage inlet pipe, respectively, so as to exchange heat with the hot high fraction gas in the spiral heat exchange tube, then a medium outputs from the shell passage outlet pipe with a pressure of 9.7 MPa to 12.2 MPa and a temperature of 160°C to 180°C, and the weight percentage of the hydrogen in the medium is 6% to 12%.

Compared with the prior art, the present invention has the following advantages. In the present invention, the first shell passage inlet pipe for inputting the hydrogen is arranged in the lower portion of the periphery of the shell, the second shell passage inlet pipe for inputting the raw oil is arranged in the middle portion of the periphery of the shell and the shell passage outlet pipe is arranged in the upper portion of the periphery of the shell, accordingly, the hydrogen can exchange heat with a low temperature section at a lower portion of the spiral heat exchange tube, so that the heat of the low temperature section of the spiral heat exchange tube is effectively utilized and recycled to the largest extent, and the logarithmic mean temperature difference (i.e., the temperature difference between the tube passage medium and the shell passage medium) can be increased, the heat exchange area and the device cost can be reduced.

Moreover, the hydrogen in the shell of the heat exchanger is filled below the raw oil, so the hydrogen forms an upward lifting force for the raw oil; and, the flow rate of the medium in the middle portion of the shell is generally stable, so it is helpful for the distribution of the raw oil.

Moreover, when the temperature of the hydrogen increases and the hydrogen is mixed with the raw oil, it is helpful for partial vaporization of the raw oil, the mixing effect of the both in the shell is obviously better than that of material mixing on the bottom of the heat exchanger in the prior art, and no liquid accumulation will be caused on the bottom of the heat exchanger.

In addition, in the present invention, by introducing the high pressure water, the high pressure water exchanges heat with the hot high fraction gas and then with the low temperature water, so that the safety problem caused by the leakage of the hot high fraction gas in the prior art was solved, and the safety of the whole system is improved. Moreover, the introduced high pressure water can be used for the water injection of the hot high fraction gas pipe.

### BRIEF DESCRIPTION OF THE DRAWINGS

Fig. 1 is a schematic diagram of a heat exchange assembly for hydrogenation device according to Embodiment 1 of the present invention;
Fig. 2 is an enlarged view of a part marked with dotted line in Fig. 1;
Fig. 3 is a schematic diagram of a heat exchange assembly for hydrogenation device according to Embodiment 2 of the present invention;
Fig. 4 is a schematic diagram of a heat exchange assembly for hydrogenation device according to Embodiment 3 of the present invention;
Fig. 5 is a schematic diagram of a heat exchange assembly for hydrogenation device according to Embodiment 4 of the present invention;
Fig. 6 is a schematic diagram of a heat exchange assembly for hydrogenation device according to Embodiment 5 of the present invention;
Fig. 7 is a schematic diagram of a heat exchange assembly for hydrogenation device according to Embodiment 6 of the present invention;
Fig. 8 is a schematic diagram of a heat exchange assembly for hydrogenation device according to Embodiment 7 of the present invention;
Fig. 9 is a schematic diagram of a heat exchange assembly for hydrogenation device according to Embodiment 8 of the present invention;
Fig. 10 is a schematic diagram of an air cooler according to Embodiment 9 of the present invention;
Fig. 11 is a schematic diagram of a plurality of heat exchange tubes and a plurality of spray tubes in Fig. 10 (the cross-section region is a water spray region);
Fig. 12 is a sectional view of the Fig. 10 along A -A;
Fig. 13 is a side view of a water collector and a center cylinder in Fig. 10;
Fig. 14 is a top view of the Fig. 13;
Fig. 15 is a side view of the partial center cylinder in Fig. 10;
Fig. 16 is a view of the Fig. 14 seeing from direction-B;
Fig. 17 is a view of the partial heat exchange tube in Fig. 10;
Fig. 18 is a top view of the water collector and the center cylinder in Fig. 10.

### DESCRIPTION OF THE EMBODIMENTS

The present invention will be further described below in detail by embodiments with reference to the accompanying drawings.

### Embodiment 1:

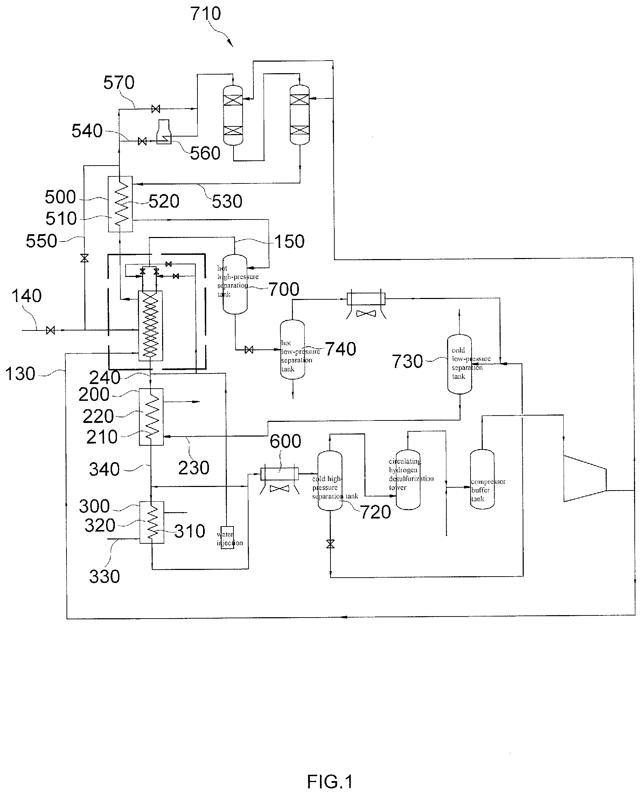

Figs. 1-2 show a first preferred embodiment of the heat exchange assembly for hydrogenation device of the present invention. The heat exchange assembly for hydrogenation comprises a first heat exchanger 100, a second heat exchanger 200, a third heat exchanger 300, a fifth heat exchanger 500 and an air cooler 600.

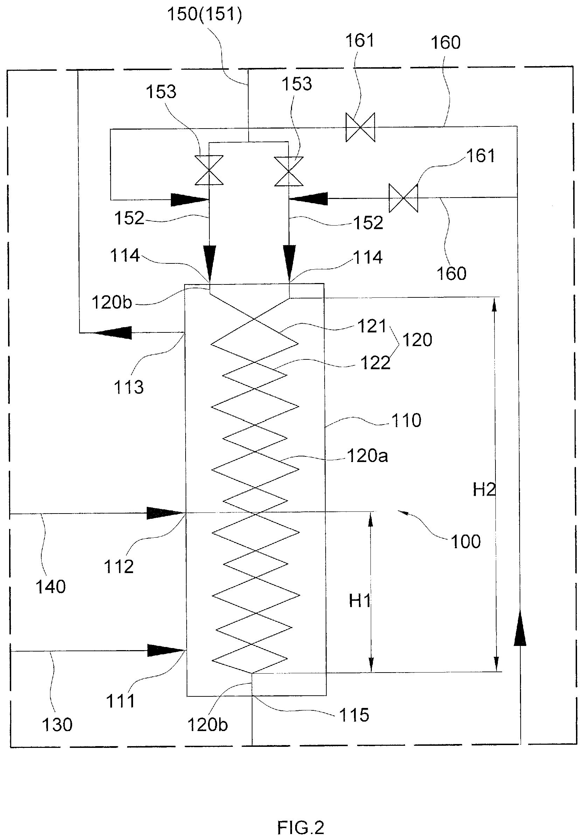

The first heat exchanger 100 comprises a shell 110 vertically arranged and one or more spiral heat exchange tubes 120 vertically disposed inside the shell 110; the shell 110 has a top portion, an upper portion, a middle portion, a lower portion and a bottom portion on a periphery of the shell 110; the shell 110 has a first shell passage inlet pipe 111 at the lower portion of the shell 110, the first shell passage inlet pipe 111 connects to a hydrogen pipe 130 for transporting hydrogen, the shell 110 has a second shell passage inlet pipe 112 at the middle portion of the shell 110 the second shell passage inlet pipe 112 connects to a raw oil pipe 140 for transporting raw oil, the shell 110 has a shell passage outlet pipe 113 on the upper portion of the shell 110; the shell 110 has one or more tube passage inlet pipes 114, each of which communicates with a top of the corresponding spiral heat exchange tube 120 and connects to a hot high fraction gas pipe 150 for transporting a hot high fraction gas output by a hot high-pressure separation tank 700 of the hydrogenation device; the shell 110 has a tube passage outlet pipe 115 which communicates with a bottom of each spiral heat exchange tube 120 at the bottom portion of the shell 110. Moreover, as shown in Fig. 2, each spiral heat exchange tube 120 of the first heat exchanger 100 has a vertically extending spiral section 120a and a first and a second straight tube sections 120b, the spiral section 120a has a top end and a bottom end, the first straight tube section 120b communicates with the top end of the spiral section 120a and the second straight tube section 120b communicates with the bottom end of the spiral section 120a; a vertical distance between the second shell passage inlet pipe 112 of the first heat exchanger 100 and the bottom end of the spiral section 120a is denoted by H1, and a vertical distance between the top end and bottom end of the spiral section 120a is denoted by H2, where 1/4≤H1:H2≤1/3.

In this embodiment, the one or more spiral heat exchange tubes 120 are double-stream heat exchange tubes composed of a first stream heat exchange tube 121 and a second stream heat exchange tube 122, the number of the tube passage outlet pipes 115 is one, and the tube passage outlet pipe 115 communicates with the bottom of the first stream heat exchange tube 121 and the second stream heat exchange tube 122. The number of the tube passage inlet pipes 114 is two, a first tube passage inlet pipe communicates with a top of the first stream heat exchange tube 121 and a second tube passage inlet pipe communicates with a top of the second stream heat exchange tube 122; the hot high fraction gas pipe 150 comprises a main pipe 151 and two branch pipes 152, an input end of the main pipe 151 connects to a hot high-pressure separation tank 700 of the hydrogenation device, and an output end of the main pipe 151 communicates with an input end of each of the two branch pipes 152, an output end of each branch pipe 152 communicates with the corresponding tube passage inlet pipe 114. A first valve 153 for controlling gas flow is arranged on each branch pipe 152, each branch pipe 152 connects to a water injection pipe 160 for transporting water, and a second valve 161 for controlling fluid flow is arranged on each water injection pipe 160. The junctions of the water injection pipes 160 and the branch pipes 152 are located downstream of the first valves 153 along a flowing direction of the high fraction gas in the branch pipes 152.

The fifth heat exchanger 500 is a vertically disposed single-stream heat exchanger with winding pipes, the fifth heat exchanger 500 comprises a fifth hot medium passage 510 ( which is the shell passage of the single-stream heat exchanger with winding pipes) and a fifth cold medium passage 520 (which is the tube passage of the single-stream heat exchanger with winding pipes), an inlet end of the fifth hot medium passage 510 connects to a product pipe 530 for transporting a reaction product output by the hydrogenation reactor 710 of the hydrogenation device, while an output end thereof connects to an input end of the hot high pressure separation tank 700 of the hydrogenation device, and, an input end of the fifth cold medium passage 520 communicates with the shell passage outlet pipe 113 of the first heat exchanger 100, while an output end thereof connects to an input end of the hydrogenation reactor 710.

In this embodiment, the output end of the fifth cold medium passage 520 communicates with the input end of the hydrogenation reactor 710 through a third pipe 540, the heat exchange assembly further comprises a fifth bypass pipe 550 with two ends, a first end of the fifth bypass pipe 550 communicates with the third pipe 540 and a second end thereof communicates with the raw oil pipe 140, and a valve for controlling a flow in the first bypass pipe 550 is arranged on the first bypass pipe 550.

Moreover, a heating furnace 560 for heating a fluid medium is arranged on the third pipe 540, the heat exchange assembly further comprises a second bypass pipe 570, an input end of the second bypass pipe 570 communicates with the output end of the fifth cold medium passage 520 and an output end of the second bypass pipe 570 connects to the input end of the hydrogenation reactor 710, and, valves for controlling the flow are arranged on the second bypass pipe 570 and the third pipe 540, respectively.

The second heat exchanger 200 is a vertically disposed single-stream heat exchanger with winding pipes, the second heat exchanger 200 comprises a second hot medium passage 210 (the tube passage of the single-stream heat exchanger with winding pipes) and a second cold medium passage 220 (the shell passage of the single-stream heat exchanger with winding pipes), an input end of the second hot medium passage 210 communicates with the tube passage outlet pipe 115 of the first heat exchanger 100 through a first pipe 240 (the first pipe 240 connects to a pipe for supplying high pressure water), and an input end of the second cold medium passage 220 connects to a cold low fraction oil pipe 230 for transporting a cold low fraction oil.

The third heat exchanger 300 is a vertically disposed single-stream heat exchanger with winding pipes, the third heat exchanger 300 comprises a third hot medium passage 310 the tube passage of the single-stream heat exchanger with winding pipes and a third cold medium passage 320 (the shell passage of the single-stream heat exchanger with winding pipes), an input end of the third hot medium passage 310 communicates with an output end of the second hot medium passage 210 of the second heat exchanger 200 through a second pipe 340 (the second pipe 340 connects to a pipe for supplying high pressure water), and an input end of the third cold medium passage 320 connects to a water supply pipe 330 for transporting water.

The air cooler 600 is the existing high pressure air cooler, an inlet of the air cooler 600 communicates with an output end of the third hot medium passage 310 of the third heat exchanger 300 and an outlet of the air cooler 600 connects to an inlet of a cold high pressure separation tank 720 of the hydrogenation device.

In this embodiment, the heat exchange assembly is applied in hydrogenation device, and the hydrogen device has the hot high pressure separation tank 700, the hydrogenation reactor 710, a cold high pressure separation tank 720, a cold low pressure separation tank 730 and a hot low pressure separation tank 740. A top end of the hot high pressure separation tank 700 is communicated with the shell passage inlet pipe 114 of the first heat exchanger 100 in the heat exchange assembly through a hot high fraction gas pipe 150, a bottom end of the hot high pressure separation tank 700 communicates an inlet of the hot low pressure separation tank 740 through a pipe (a pressure reduction device is arranged on the pipe), and a top end of the hot low pressure separation tank 740 is communicated with an inlet of the cold low pressure separation tank 730 through a pipe (a hot low fraction gas air cooler is arranged on the pipe). An inlet of the cold high pressure separation tank 720 is communicated with the outlet of the air cooler 600 in the heat exchange assembly, and a bottom end of the cold high pressure separation tank 720 is communicated with the inlet of the cold low pressure separation tank 730 through a pipe (a pressure reduction device is arranged on the pipe). The top end of the old high pressure separation tank 720 connects to a circulating pump through a pipe (a circulating hydrogen desulfurization tower and a compressor buffer tank are successively arranged on the pipe in a direction of a flow in the cold high pressure separation tank 720). The flow output from the circulating pump is divided into two paths, the first path passes through the hydrogen pipe 130, and the second path is transported to the hydrogenation reactor 710.

### Embodiment 2:

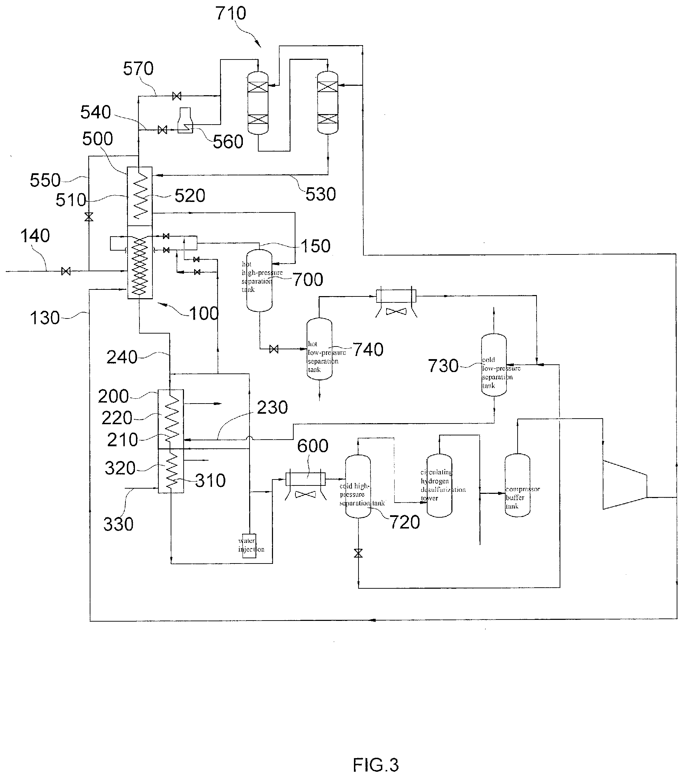

Figs. 3 shows a second embodiment of the heat exchange assembly for hydrogenation device of the present invention. This embodiment is basically the same as Embodiment 1, except that the second and third heat exchangers in this embodiment are combined to form a vertical heat exchanger, and the second heat exchanger 200 is located above the third heat exchanger 300. Moreover, the fifth heat exchanger 500 and the first heat exchanger 100 are combined to form a vertical heat exchanger, the fifth heat exchanger 500 is located above the first heat exchanger 100, and the fifth heat exchanger 500 and the first heat exchanger 100 are separated by a plate. A lower end of the fifth cold medium passage 520 of the fifth heat exchanger 500 is supported on the plate and communicated with a hollow interior of the shell 110 of the first heat exchanger 100.

### Embodiment 3:

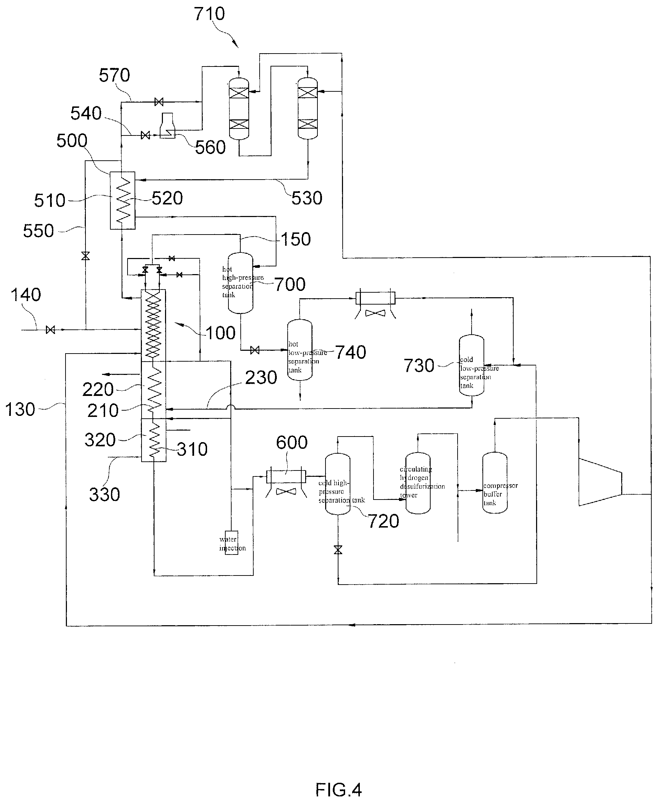

Fig. 4 shows a third embodiment of the heat exchange assembly for hydrogenation device of the present invention. This embodiment is basically the same as Embodiment 1, except that the first, second and third heat exchangers in this embodiment are combined to form a vertical heat exchanger, and the first heat exchanger 100, the second heat exchanger 200 and the third heat exchanger 300 are arranged successively from the top down.

### Embodiment 4:

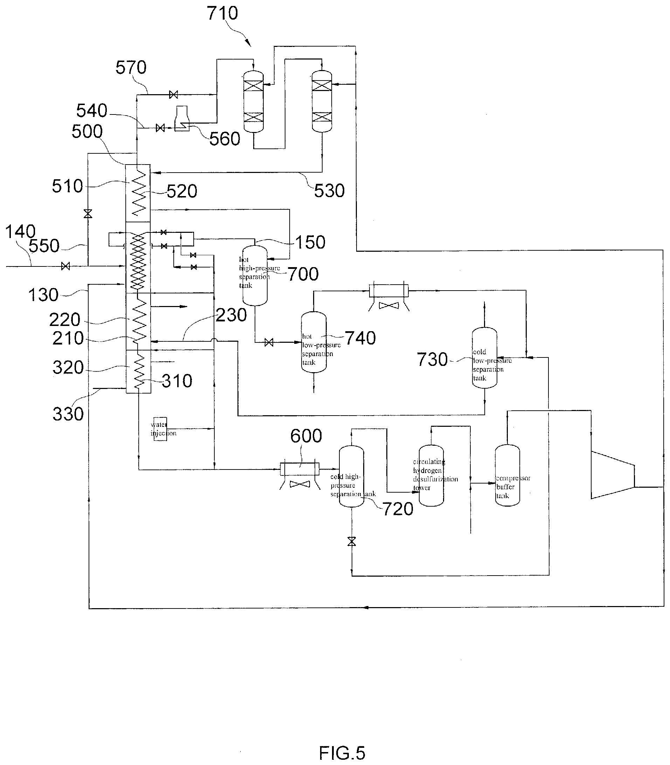

Fig. 5 shows a fourth embodiment of the heat exchange assembly for hydrogenation device of the present invention. This embodiment is basically the same as Embodiment 1, except that the first, second, third and fifth heat exchangers in this embodiment are combined to form a vertical heat exchanger, and the fifth heat exchanger 500, the first heat exchanger 100, the second heat exchanger 200 and the third heat exchanger 300 are arranged successively from the top down.

### Embodiment 5:

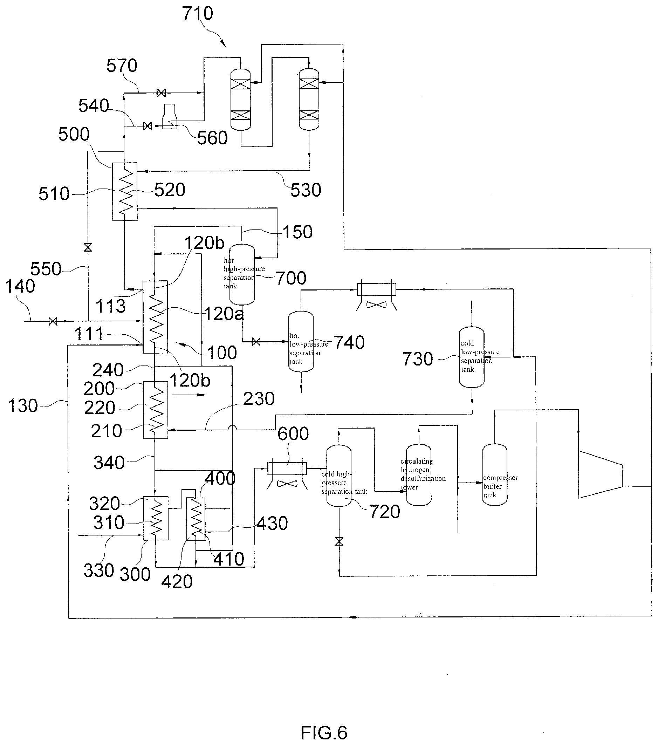

Fig. 6 shows a fifth embodiment of the heat exchange assembly for hydrogenation device of the present invention. This embodiment is basically the same as Embodiment 1, except that the water supply pipe 330 is used for transporting high pressure water; and, the heat exchange assembly further comprises a fourth heat exchanger 400 comprising a fourth hot medium passage 410 (the tube passage of the single-stream heat exchanger with winding pipes) and a fourth cold medium passage 420 (the shell passage of the single-stream heat exchanger with winding pipes), an input end of the fourth hot medium passage 410 communicates with an output end of the third hot medium passage 310 of the third heat exchanger 300, and an input end of the fourth cold medium passage 420 is connected to a low pressure water pipe 430 for transporting low pressure water.

Moreover, an output end of the fourth hot medium passage 410 of the fourth heat exchanger 400 communicates with the hot high fraction gas pipe 150, the first pipe 240 and the second pipe 340. That is, in this embodiment, the high pressure water output from the output end of the fourth hot medium passage 410 can supply water to the hot high fraction gas pipe 150, the first pipe 240 and the second pipe 340, so that the external high pressure water does not need to be supplied to the hot high fraction gas pipe 150, the first pipe 240 and the second pipe 340.

Moreover, the spiral heat exchange tube of the first heat exchanger 100 in this embodiment is a single-stream heat exchange tube. Correspondingly, the number of the tube passage inlet pipes 114 of the first heat exchanger 100 is one. This tube passage inlet pipes 114 directly communicates with a top end of the hot high pressure separation tank 700 through the hot high fraction gas pipe 150.

Moreover, in this embodiment, the first shell passage inlet pipe 111 of the first heat exchanger 100 locates blow the bottom end of the spiral section 120a, the shell passage outlet pipe 113 locates over the top end of the spiral section 120a.

The heat exchange process in this embodiment is described below.
1. The hot high fraction gas with a pressure of 9 MPa to 11.5 MPa and a temperature of 230°C to 250°C enters into the spiral heat exchange tube 120 of the first heat exchanger 100 through the tube passage inlet pipe 114 from the hot high pressure separation tank 700, and the hydrogen with a pressure of 10 MPa to 12.5 MPa and a temperature of 70°C to 95°C and the raw oil with a pressure of 11 MPa to 13.5 MPa and a temperature of 130°C to 165°C enter into the shell 110 through the first shell passage inlet pipe 111 and the second shell passage inlet pipe 112, respectively, so as to exchange heat with the hot high fraction gas in the spiral heat exchange tube 120, then a medium outputs from the shell passage outlet pipe 113 with a pressure of 9.7 MPa to 12.2 MPa and a temperature of 160°C to 180°C, and the weight percentage of the hydrogen in the medium is 6% to 12%.
2. The hot high fraction gas output from the tube passage outlet pipe 115 of the first heat exchanger 100 enters the second hot medium passage 210 of the second heat exchanger 200 and exchanges heat with the cold low fraction oil in the second cold medium passage 220, where the cold low fraction oil before entering the second cold medium passage 220 has a pressure of 1.0 MPa to 1.8 MPa and a temperature of 48°C to 55°C, and the cold low fraction oil output from the second cold medium passage 220 after heat exchange has a pressure of 1.0 MPa to 1.8 MPa and a temperature of 160°C to 185°C.
3. The hot high fraction gas output from the second hot medium passage 210 of the second heat exchanger 200 enters the third hot medium passage 310 of the third heat exchanger 300 and exchanges heat with the high pressure water in the third cold medium passage 320, wherein the high pressure water before entering the third cold medium passage 320 has a pressure of 12.5 MPa to 13.5 MPa and a temperature of 60°C to 75°C, and the hot high fraction gas output from the third hot medium passage 310 has a temperature of 70°C to 80°C.
4. The high pressure water output from the third cold medium passage 320 after heat exchange enters the fourth hot medium passage 410 of the fourth heat exchanger 400 and exchanges heat with the low pressure water in the fourth cold medium passage 420, wherein the low pressure water before entering fourth cold medium passage 420 has a pressure of 0.6 MPa to 1.2 MPa and a temperature of 60°C to 70°C, and the low pressure water output from the fourth cold medium passage 420 after heat exchange has a pressure of 0.6 MPa to 1.2 MPa and a temperature of 95°C to 135°C.
5. The medium output from the shell passage outlet pipe 113 of the first heat exchanger 100 enters the fifth cold medium passage 520 of the fifth heat exchanger 500, then exchanges heat with the hot medium in the fifth hot medium passage 510 and is output from the fifth heat exchanger 500 (the output pressure of the medium is 9.5 MPa to 12.0 MPa and the temperature is 320°C to 365°C). The medium selectively passes through the third pipe 540 or the second bypass pipe 570 and then enters the hydrogenation reactor 710 for hydrogenation. The medium before entering the hydrogenation reactor 710 has a pressure of 9.5 MPa to 12.0 MPa and a temperature of 335°C to 380°C. The reaction product output from the hydrogenation reactor 710 has a pressure of 9.2 MPa to 11.6 MPa and a temperature of 360°C to 415°C and the reaction product then enters the fifth hot medium passage 510 of the fifth heat exchanger 500. The reaction product output from the fifth heat exchanger 500 enters the hot high pressure separation tank 700 for gas-liquid separation.

### Embodiment 6:

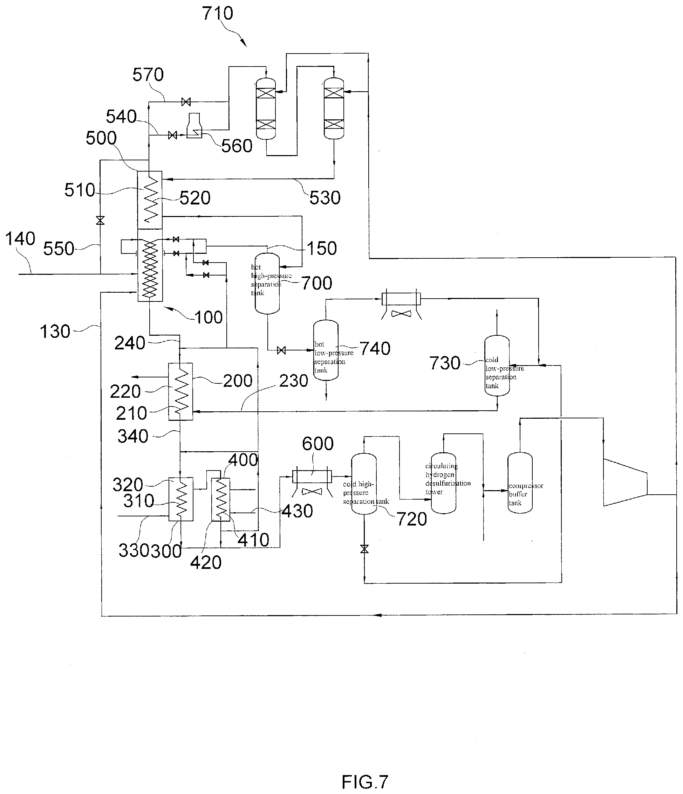

Fig. 7 shows a sixth embodiment of the heat exchange assembly for hydrogenation device of the present invention. This embodiment is basically the same as Embodiment 5, except that the fifth heat exchanger 500 and the first heat exchanger 100 in this embodiment are combined to form a vertical heat exchanger, and the fifth heat exchanger 500 is located above the first heat exchanger 100. Moreover, the structure of the first heat exchanger 100 in this embodiment is basically the same as the structure of the first heat exchanger 100 in Embodiment 1.

### Embodiment 7:

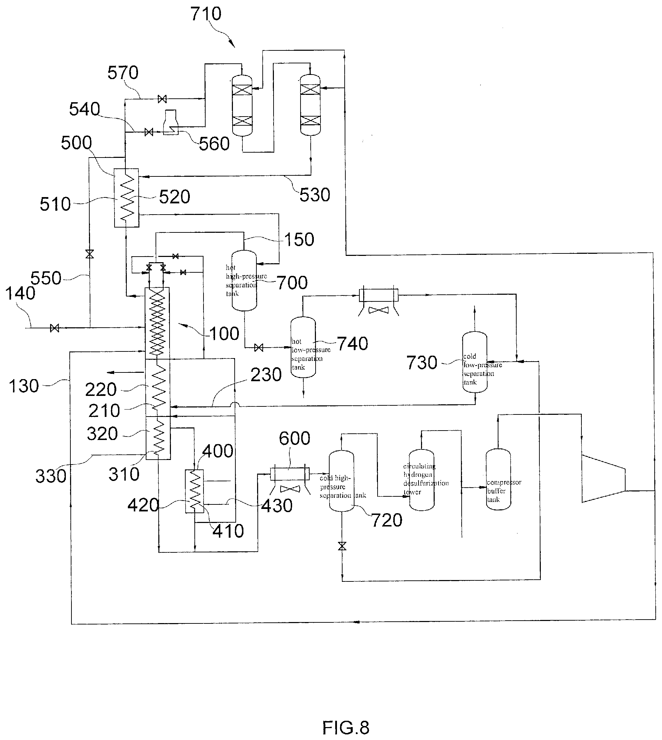

Fig. 8 shows a seventh embodiment of the heat exchange assembly for hydrogenation device of the present invention. This embodiment is basically the same as Embodiment 5, except that the first, second and third heat exchangers in this embodiment are combined to form a vertical heat exchanger, and the first heat exchanger 100, the second heat exchanger 200 and the third heat exchanger 300 are arranged successively from the top down. Moreover, the structure of the first heat exchanger 100 in this embodiment is basically the same as the structure of the first heat exchanger 100 in Embodiment 1.

### Embodiment 8:

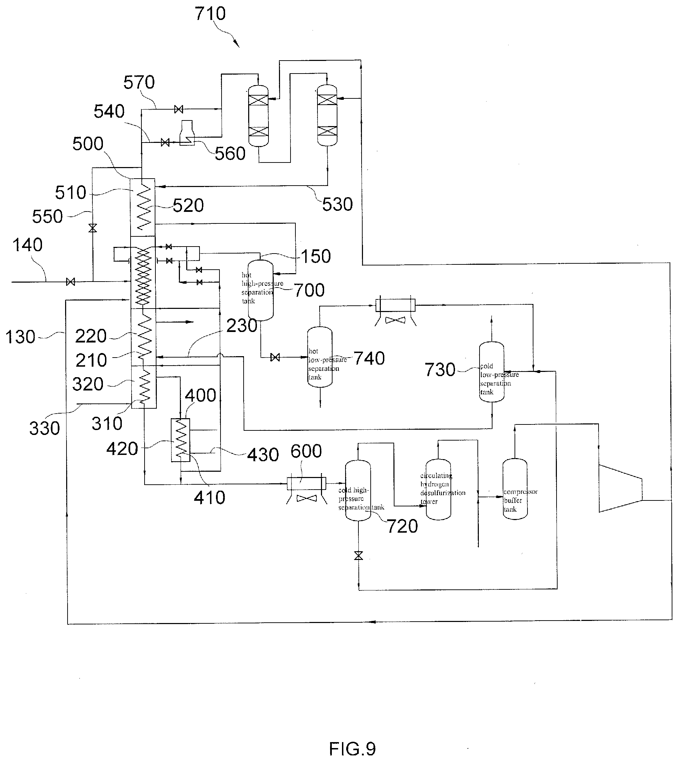

Fig. 9 shows an eighth embodiment of the heat exchange assembly for hydrogenation device of the present invention. This embodiment is basically the same as Embodiment 5, except that the first, second, third and fifth heat exchangers in this embodiment are combined to form a vertical heat exchanger, and the fifth heat exchanger 500, the first heat exchanger 100, the second heat exchanger 200 and the third heat exchanger 300 are arranged successively from the top down.

Moreover, the structure of the first heat exchanger 100 in this embodiment is basically the same as the structure of the first heat exchanger 100 in Embodiment 1, except that: in this embodiment, in the flowing direction of the hot high fraction gas in the branch pipes 152, the junctions of the water injection pipes 160 and the branch pipes 152 are located upstream of the first valves 153.

### Embodiment 9:

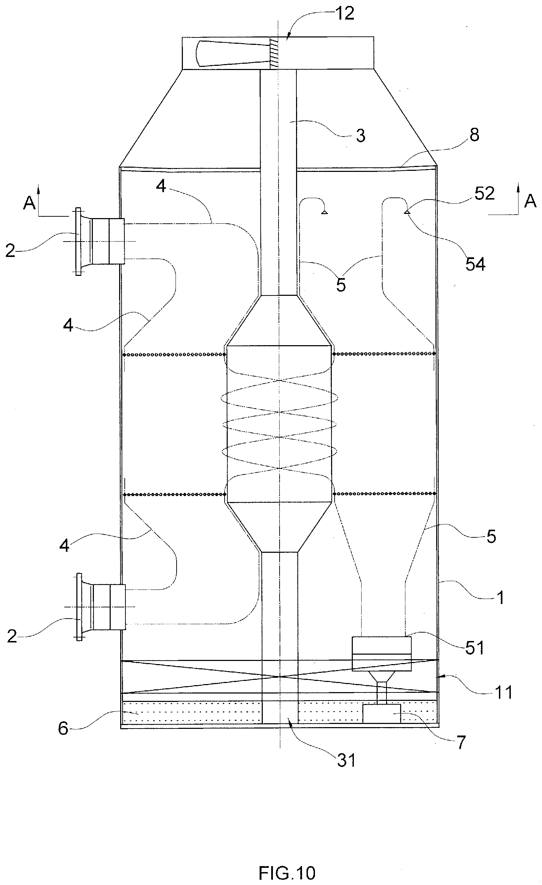

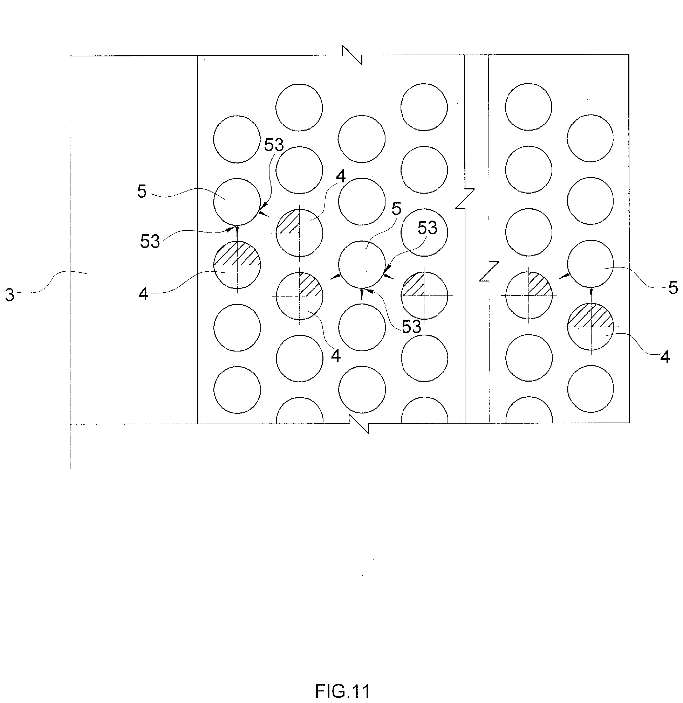

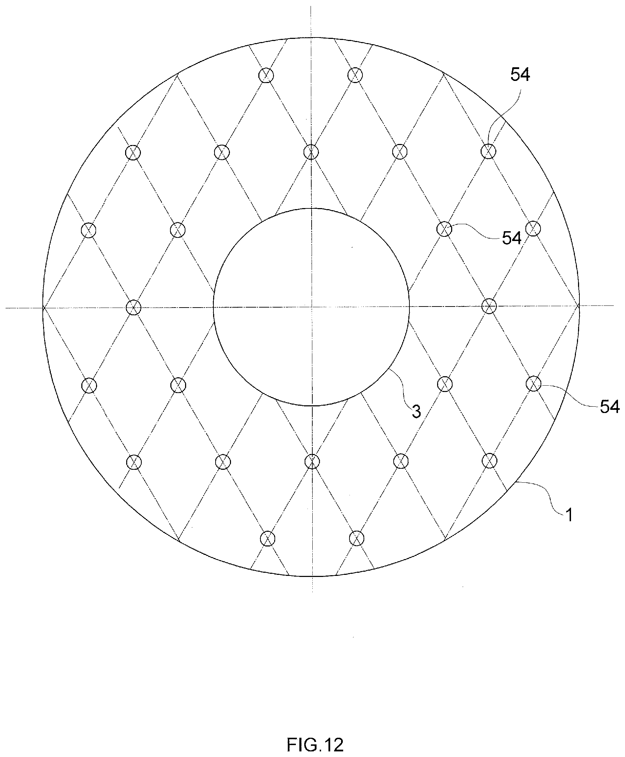

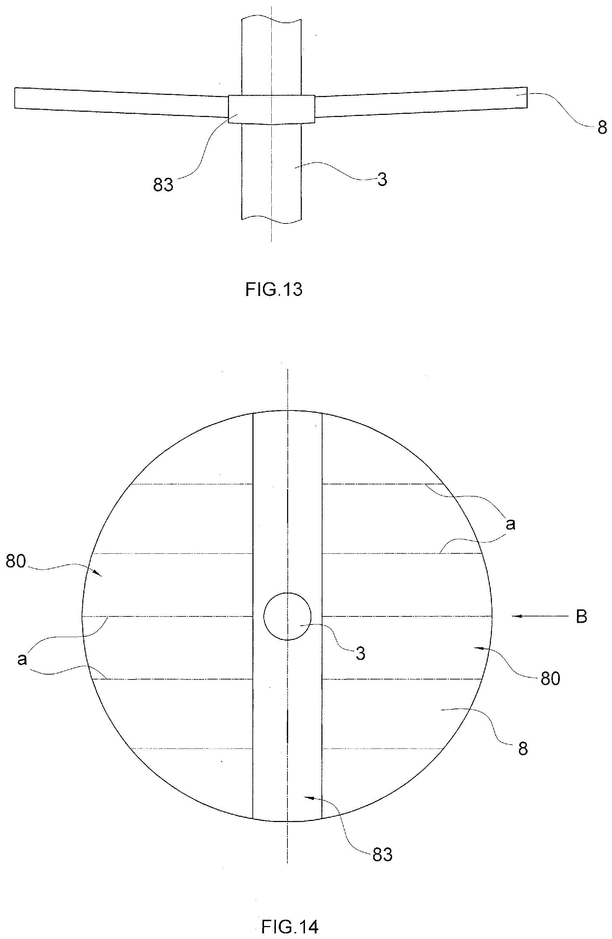

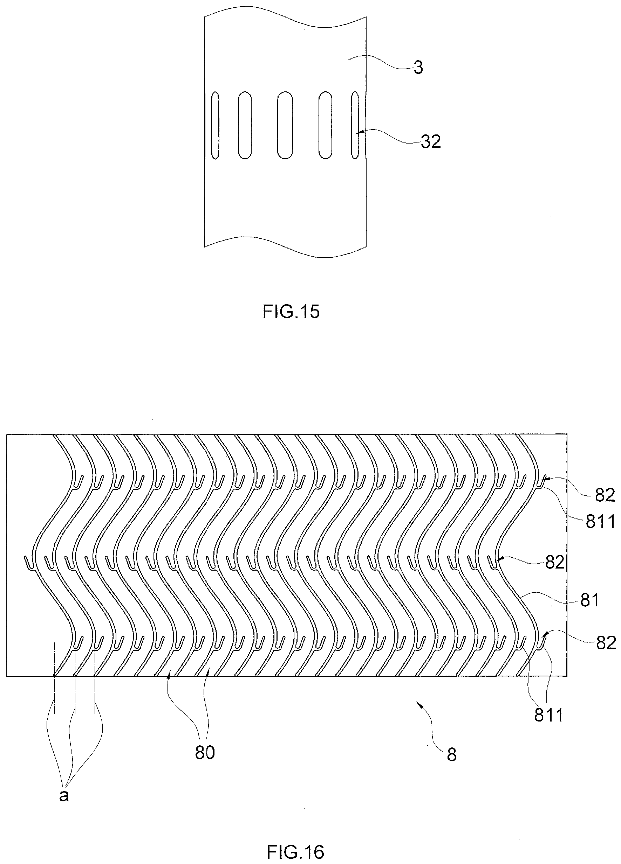

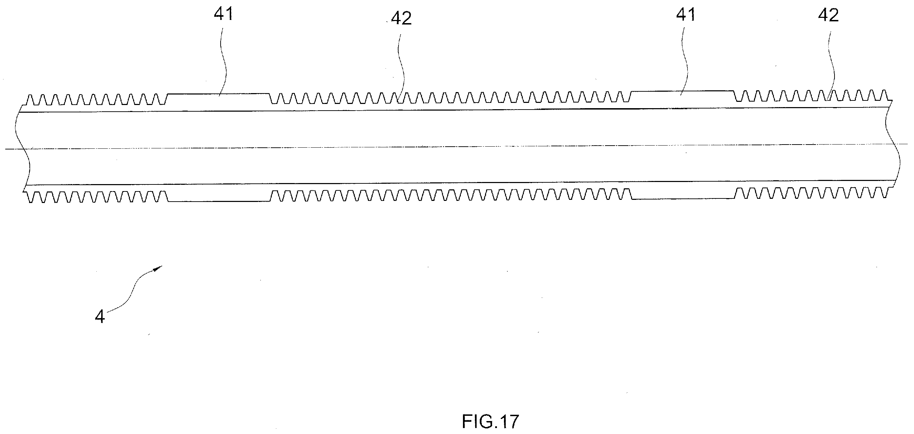

Figs. 10-17 show a nineth embodiment of the heat exchange assembly for hydrogenation device of the present invention. This embodiment is basically the same as Embodiment 1, except that the structure of the air cooler 600 in this embodiment is different, specifically:
the air cooler 600 in this embodiment is a complex air cooler with winding pipes, comprising a shell passage housing 1, two tube plates, two tube boxes 2, a center cylinder 3, a plurality of heat exchange tubes 4, a plurality of spray tubes 5, a water collection tank 6, a water pump 7 and a water collector 8.

The shell passage housing 1 is arranged vertically, and has an air inlet 11 and an air outlet 12 respectively at a bottom and a top of the shell passage housing 1. A fan is arranged at the air outlet 12, so that the air flow enters the shell passage housing 1 from the air inlet 11 and is then discharged from the air outlet 12. The water collection tank 6 is arranged on the bottom of the shell passage housing 1.

The two tube plates are disposed on a periphery of the shell passage housing 1, one above the other, and the two tube boxes 2 are respectively disposed on one corresponding tube plate, serving as an inlet and an output of the air cooler 600, respectively.

The center cylinder 3 is vertically arranged in the shell passage housing 1. The center cylinder 3 is hollow, and a lower port 31 of the center cylinder 3 extends into the water collection tank 6.

The plurality of heat exchange tubes 4 is disposed inside the shell passage housing 1 along an axis of the shell passage housing 1 and each heat exchange tube 4 is spirally wound around the center cylinder 3 to form a multiple-layer spiral tube, a distance between adjacent layers of spiral tubes is not less than 4 mm, two ends of each heat exchange tube 4 are respectively supported on the corresponding tube plate and communicate with the corresponding tube box 2. In this embodiment, the heat exchange tube 4 is a corrugated tube, and has one or more smooth tube sections 41 with smooth surfaces and one or more corrugated sections 42 with corrugated surfaces, the corrugated sections 42 and the smooth tube sections 41 are alternately arranged lengthwise of the heat exchange tube 4, and, the corrugated sections 42 are longer than the smooth tube sections 41. Specifically, the length of the corrugated sections 42 is 200 mm, and the length of the smooth tube sections 41 is 50 mm. The smooth tube sections 41 are used to cooperate with fixation members (e.g., filler strips for the heat exchanger) to fix the heat exchangers.

The plurality of spray tubes 5 is disposed inside the shell passage housing 1 wound in each layer of the spiral tube along a spiral direction of the heat exchange tubes 4 (the spiral tube in each layer has at least one spray tube 5, and this spray tube 5 is synchronously wound with the plurality of heat exchange tubes 4 in this layer, as shown in Fig. 2). Each spray tube 5 has a liquid inlet 51 at a bottom of the spray tube 5 and a liquid outlet 52 opened downward at a top of the spray tube 5, the liquid inlet 51 communicates with the water collection tank 6 through the water pump 7, the liquid outlets 52 are located above the spiral tube and arranged at regular intervals along a circumference of the shell passage housing 1. In order to make the water flow sprayed by each liquid outlet 52 more uniform, preferably, the liquid outlet 52 at the top of each spray tube 5 connects to a nozzle 54 which can spray water downward. In this embodiment, three adjacent nozzles 54 are distributed at three endpoints of a regular triangle to ensure that the spray radius of each nozzle 54 is not less than 150 mm. each spray tube 5 has a plurality of spray holes 53 on a wall of each spray tube 5, each spray hole 53 faces a wall of an adjacent heat exchange tube 4 to spray the adjacent heat exchange. Specifically referring to Fig. 2, the multiple spiral tube layers are defined as No.1 layer, No.2 layer ...No. N layer successively from the inside to the outside of the first heat exchanger 100, wherein the plurality of spay holes on the spray tube in No.1 layer face the top surface of the heat exchange tube in No.2 layer and the top surface of the heat exchange tubes adjacent to each other in No.1 layer (below the spray tube in No.1 layer); the plurality of spay holes on the spray tube in No. N layer face the top surface of the heat exchange tube in No.N-1 layer and the top surface of the heat exchange tubes adjacent to each other in No. N layer (below the spray tube in No. N layer); the plurality of spray holes 53 in intermediate layers between No.1 layer and No. N layer face the top surface of the heat exchange tube in the adjacent layer and the top surface of the heat exchange tubes adjacent to each other in the same layer.

The water collector 8 is arranged inside the shell passage housing 1 and located above the water outlets 52 of the spray tubes 5, and the water collector 8 has a plurality of passages 80 which allow a gas flow to pass upward and can collect water in the gas flow. In this embodiment, the water collector 8 is sleeved on a periphery of the center cylinder 3, and comprises a plurality of water collection plates 81 which are arranged vertically and connected to each other. The plurality of water collection plated 81 may be connected to each other through an upper base plate and/or a lower base plate (the upper and lower base plates may be manufactured into grids or plates with holes), or may be connected to each other through a plurality of connecting rods. The connecting rods successively pass through the water collection plates 81 so as to connect the water collection plates 81. The plurality of water collection plates 81 are arranged at regular intervals in a horizontal direction. Preferably, a distance between two adjacent water collection plates is 20 mm to 50 mm the distance may be 20 mm, 50 mm or any value between the both. Under such design, the gas-water separation effect can be ensured without affecting the heat exchange of the air cooler, so that each passage 80 is formed between the surfaces of two adjacent water collection plates 81, sheets 811 extending upward protrude from the surface of each water collection plate 81, and, the water collector 8 has a plurality of collection channels 82 between the sheets 811 and the surface of each water collection plate 81 which open upward for collecting accumulated water on the surfaces of the water collection plates 81 above the sheets 811. Specifically, referring to Figs. 5 and 7 (in Fig. 5, each water collection plate 81 is denoted by the base line a, the number of base lines a is not limited to the number shown in Fig. 5, and the mounting positions and arrangement direction of the water collection plates 81 are represented by a plurality of base lines a). In this embodiment, the water collector 8 further comprises a collection groove 83 which is formed in a center of the water collector 8 and extends in the arrangement direction of the water collection plates 81 to pass through the water collection plates 81. The water collection groove 83 has a bottom plate having two sides and a side plate on each side of the bottom plate. The bottom plate and the two side plates form the U-shaped collection groove 83. each collection channel 82 extends from an inner surface of the shell passage housing 1 to the collection groove 83 along surfaces of the water collection plates 81 and communicates with the collection groove 83, and each collection channel 82 is inclined downward from outside to inside, so that water in the collection channels 82 can flow into the collection groove 83 under the action of gravity. The center cylinder 3 passes through the water collection groove 83, the center cylinder 3 has a water inlet 32 communicating with the collection groove 83 on a periphery of the center cylinder 3. In this way, the water collected in the collection channels 82 enters into the center cylinder 3 after passing through the collection groove 83 and the water inlet 32 and then flows back to the water collection tank 6, thereby realizing a reuse of the cooling water.

In this embodiment, in order to achieve better water collection effect, each water collection plate 81 is wave-shaped and has one or more protruded portions and one or more recesses, as shown in Fig. 7. The water collection plate 81 has at least one collection channel 82 on each surface of each water collection plate 81, and the at least one collection channel 82 is located at the protruded portion of each water collection plate 81, so that the water accumulated on each water collection plate 81 can be completely collected by the collection channel 82.

### Embodiment 10:

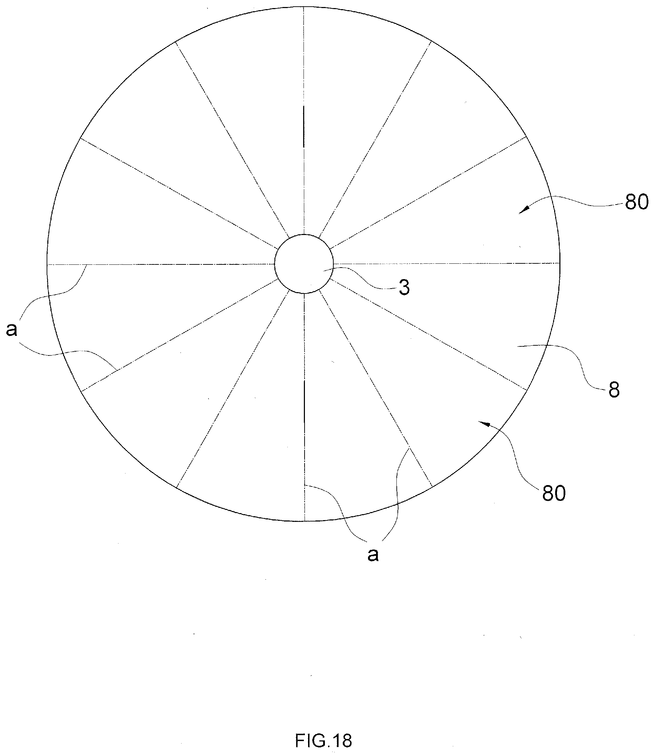

Fig. 18 shows a tenth preferred Embodiment of the heat exchange assembly for hydrogenation device of the present invention. This embodiment is basically the same as Embodiment 9, except that the structure of the water collector 8 of the air cooler 600 in this embodiment is slightly different, specifically: in this embodiment, the water collector 8 comprises a plurality of water collection plates 81 which are arranged vertically and connected to each other, the water collection plates 81 are arranged at regular intervals around the center cylinder 3, and each passage 80 for allowing the gas flow to pass upward therethrough is formed between the surfaces of two adjacent water collection plates 81, sheets 811 extending upward protrude from the surface of each water collection plate 81, and, the water collector 8 has a plurality of collection channels 82 between the sheets 811 and the surface of each water collection plate 81 which open upward for collecting accumulated water on the surfaces of the water collection plates 81 above the sheets 811, each collection channel extends from an inner surface of the shell passage housing 1 to the center cylinder 3 along surfaces of the water collection plates 81, the collection channels 82 are inclined downward from outside to inside; the center cylinder 3 is a hollow tube with a lower end 31, and the lower end 31 communicates with the water collection tank 6, the center cylinder 3 has a water inlet 32 communicating with the collection channels 82 on a periphery of the center cylinder 3.

In this way, when the gas flow passes upward through the passages 80, water in the gas flow will be accumulated on the surfaces of the water collection plates 81 and flows downward into the collection channels 82 along the surfaces of the water collection plates 81. The water in the collection channels 82 flows to the water inlet 32 of the center cylinder 3 along the collection channels 82 under the action of gravity and then flows back to the water collection tank 6 through the center cylinder 3, thereby realizing a circulation and reuse of water.

## Claims

1. A heat exchange assembly for a hydrogenation device, comprising a first heat exchanger (100);
**characterized in that**,
the first heat exchanger (100) comprises a shell (110) vertically arranged and one or more spiral heat exchange tubes (120) vertically disposed inside the shell (110);
the shell (110) has a top portion, an upper portion, a middle portion, a lower portion and a bottom portion on a periphery of the shell (110);
the shell (110) has a first shell passage inlet pipe (111) at the lower portion of the shell (110), a second shell passage inlet pipe (112) at the middle portion of the shell (110) and a shell passage outlet pipe (113) on the upper portion of the shell (110), the first shell passage inlet pipe (111) connects to a hydrogen pipe (130) for transporting hydrogen, the second shell passage inlet pipe (112) connects to a raw oil pipe (140) for transporting raw oil;
the shell (110) has one or more tube passage inlet pipes (114), each of which communicates with a top of the corresponding spiral heat exchange tube (120) and connects to a hot high fraction gas pipe (150) for transporting a hot high fraction gas output by a hot high-pressure separation tank (700) of the hydrogenation device;
the shell (110) has a tube passage outlet pipe (115) which communicates with a bottom of each spiral heat exchange tube (120) at the bottom portion of the shell (110).

2. The heat exchange assembly according to claim 1, **characterized in that** the one or more spiral heat exchange tubes (120) are double-stream heat exchange tubes composed of a first stream heat exchange tube (121) and a second stream heat exchange tube (122), the number of the tube passage inlet pipes (114) is two, a first tube passage inlet pipe communicates with a top of the first stream heat exchange tube (121) and a second tube passage inlet pipe communicates with a top of the second stream heat exchange tube (122);
the hot high fraction gas pipe (150) comprises a main pipe (151) and two branch pipes (152), an input end of the main pipe (151) connects to a hot high-pressure separation tank (700) of the hydrogenation device, and an output end of the main pipe (151) communicates with an input end of each of the two branch pipes (152), an output end of each branch pipe (152) communicates with the corresponding tube passage inlet pipe (114).

3. The heat exchange assembly according to claim 2, **characterized in that** a first valve (153) for controlling gas flow is arranged on each branch pipe (152), each branch pipe (152) connects to a water injection pipe (160) for transporting water, and a second valve (161) for controlling fluid flow is arranged on each water injection pipe (160).

4. The heat exchange assembly according to claim 2, **characterized in** the number of the tube passage outlet pipes (115) is one, and the tube passage outlet pipe (115) communicates with the bottom of the first stream heat exchange tube (121) and the second stream heat exchange tube (122).

5. The heat exchange assembly according to claim 1, **characterized in that** each spiral heat exchange tube (120) of the first heat exchanger (100) has a vertically extending spiral section (120a) and a first and a second straight tube sections (120b), the spiral section (120a) has a top end and a bottom end, the first straight tube section (120b) communicates with the top end of the spiral section (120a) and the second straight tube section (120b) communicates with the bottom end of the spiral section (120a);
a vertical distance between the second shell passage inlet pipe (112) of the first heat exchanger (100) and the bottom end of the spiral section (120a) is denoted by H1, and a vertical distance between the top end and bottom end of the spiral section (120a) is denoted by H2, where 1/4≤H1:H2≤1/3.

6. The heat exchange assembly according to claim 5, **characterized in that** the first shell passage inlet pipe (111) of the first heat exchanger (100) locates blow the bottom end of the spiral section (120a), the shell passage outlet pipe (113) locates over the top end of the spiral section (120a).

7. The heat exchange assembly according to any one of claims 1-6, **characterized in that** the heat exchange assembly further comprises a fifth heat exchanger (500) comprising a fifth hot medium passage (510) and a fifth cold medium passage (520), an inlet end of the fifth hot medium passage (510) connects to a product pipe (530) for transporting a reaction product output by the hydrogenation reactor (710) of the hydrogenation device, while an output end thereof connects to an input end of the hot high pressure separation tank (700) of the hydrogenation device, and, an input end of the fifth cold medium passage (520) communicates with the shell passage outlet pipe (113) of the first heat exchanger (100), while an output end thereof connects to an input end of the hydrogenation reactor (710).

8. The heat exchange assembly according to claim 7, **characterized in that** the output end of the fifth cold medium passage (520) communicates with the input end of the hydrogenation reactor (710) through a third pipe (540), the heat exchange assembly further comprises a fifth bypass pipe (550) with two ends, a first end of the fifth bypass pipe (550) communicates with the third pipe (540) and a second end thereof communicates with the raw oil pipe (140), and a valve for controlling a flow in the first bypass pipe (550) is arranged on the first bypass pipe (550).

9. The heat exchange assembly according to claim 8, **characterized in that** a heating furnace (560) for heating a fluid medium is arranged on the third pipe (540), the heat exchange assembly further comprises a second bypass pipe (570), an input end of the second bypass pipe (570) communicates with the output end of the fifth cold medium passage (520) and an output end of the second bypass pipe (570) connects to the input end of the hydrogenation reactor (710), and, valves for controlling the flow are arranged on the second bypass pipe (570) and the third pipe (540), respectively.

10. The heat exchange assembly according to any one of claims 1-6, **characterized in that** the heat exchange assembly further comprises a second heat exchanger (200) comprising a second hot medium passage (210) and a second cold medium passage (220), an input end of the second hot medium passage (210) communicates with the tube passage outlet pipe (115) of the first heat exchanger (100), and an input end of the second cold medium passage (220) connects to a cold low fraction oil pipe (230) for transporting a cold low fraction oil.

11. The heat exchange assembly according to claim 10, **characterized in that** the heat exchange assembly further comprises a third heat exchanger (300) comprising a third hot medium passage (310) and a third cold medium passage (320), an input end of the third hot medium passage (310) communicates with an output end of the second hot medium passage (210) of the second heat exchanger (200), and an input end of the third cold medium passage (320) connects to a water supply pipe (330) for transporting water.

12. The heat exchange assembly according to claim 11, **characterized in that** the water supply pipe (330) is used for transporting high pressure water;
the heat exchange assembly further comprises a fourth heat exchanger (400) comprising a fourth hot medium passage (410) and a fourth cold medium passage (420), an input end of the fourth hot medium passage (410) communicates with an output end of the third hot medium passage (310) of the third heat exchanger (300), and an input end of the fourth cold medium passage (420) is connected to a low pressure water pipe (430) for transporting low pressure water.

13. The heat exchange assembly according to claim 12, **characterized in that** an output end of the fourth hot medium passage (410) of the fourth heat exchanger (400) communicates with the hot high fraction gas pipe (150);
the tube passage outlet pipe (115) of the first heat exchanger (100) communicates with the input end of the second hot medium passage (210) of the second heat exchanger (200) through a first pipe (240), and the first pipe (240) communicates with the output end of the fourth hot medium passage (410) of the fourth heat exchanger (400);
the output end of the second hot medium passage (210) of the second heat exchanger (200) communicates with the input end of the third hot medium passage (310) of the third heat exchanger (300) through a second pipe (340), and the second pipe (340) communicates with the output end of the fourth hot medium passage (410) of the fourth heat exchanger (400).

14. The heat exchange assembly according to claim 11, **characterized in that** the heat exchange assembly further comprises an air cooler (600), an inlet of the air cooler (600) communicates with an output end of the third hot medium passage (310) of the third heat exchanger (300) and an outlet of the air cooler (600) connects to an inlet of a cold high pressure separation tank (720) of the hydrogenation device.

15. The heat exchange assembly according to claim 14, **characterized in that** the air cooler (600) comprises:
a shell passage housing (1) arranged vertically and having an air inlet (11) and an air outlet (12) respectively at a bottom and a top of the shell passage housing (1);
two tube plates disposed on a periphery of the shell passage housing (1), one above the other;
two tube boxes (2) respectively disposed on one corresponding tube plate;
a center cylinder (3) vertically arranged inside the shell passage housing (1);
a plurality of heat exchange tubes (4) each having two ends;
a plurality of spray tubes (5) each having an upper end and a lower end;
wherein,
the plurality of heat exchange tubes (4) is disposed inside the shell passage housing (1) along an axis of the shell passage housing (1) and each heat exchange tube (4) is spirally wound around the center cylinder (3) to form a multiple-layer spiral tube, two ends of each heat exchange tube (4) are respectively supported on the corresponding tube plate and communicate with the corresponding tube box (2);
the plurality of spray tubes (5) is disposed inside the shell passage housing (1) wound in each layer of the spiral tube along a spiral direction of the heat exchange tubes (4), each spray tube (5) has a liquid inlet (51) at a bottom of the spray tube (5) and a liquid outlet (52) opened downward at a top of the spray tube (5), the liquid outlets (52) are located above the spiral tube and arranged at regular intervals along a circumference of the shell passage housing (1);
each spray tube (5) has a plurality of spray holes (53) on a wall of each spray tube (5), each spray hole (53) faces a wall of an adjacent heat exchange tube (4).

16. The heat exchange assembly according to claim 15, **characterized in that** a nozzle (54) is arranged on each liquid outlet (52).

17. The heat exchange assembly according to claim 15, **characterized in that** the shell passage housing (1) has a water collection tank (6) on a bottom of the shell passage housing (1), the liquid inlet (51) of each spray tube (5) communicates with the water collection tank (6) through a water pump (7).

18. The heat exchange assembly according to claim 17, **characterized in that** the shell passage housing (1) has an upper end and a lower end, the shell passage housing (1) has the air inlet (11) at a surface of the lower end of the shell passage housing (1), and the air outlet (12) at a surface of the upper end of the shell passage housing (1).

19. The heat exchange assembly according to claim 18, **characterized in that** the heat exchange assembly further comprises a water collector (8) which is arranged in the shell passage housing (1) and located above the water outlets (52) of the spray tubes (5), and the water collector (8) has a plurality of passages (80) which allow a gas flow to pass upward and can collect water in the gas flow.

20. The heat exchange assembly according to claim 19, **characterized in that** the water collector (8) comprises a plurality of water collection plates (81) which are arranged vertically and connected to each other, the water collection plates (81) are arranged at regular intervals in a horizontal direction, and each passage (80) is formed between the surfaces of two adjacent water collection plates (81), sheets (811) extending upward protrude from the surface of each water collection plate (81), and, the water collector (8) has a plurality of collection channels (82) between the sheets (811) and the surface of each water collection plate (81) which open upward for collecting accumulated water on the surfaces of the water collection plates (81) above the sheets (811).

21. The heat exchange assembly according to claim 20, **characterized in that** the water collector (8) further comprises a collection groove (83) which is formed in a center of the water collector (8), and each collection channel (82) extends from an inner surface of the shell passage housing (1) to the collection groove (83) along surfaces of the water collection plates (81) and communicates with the collection groove (83);
the water collector (8) is sleeved on a periphery of the center cylinder (3), and the center cylinder (3) passes through the collection groove (83), the center cylinder (3) is a hollow tube with a lower end (31), and the lower end (31) communicates with the water collection tank (6), the center cylinder (3) has a water inlet (32) communicating with the collection groove (83) on a periphery of the center cylinder (3).

22. The heat exchange assembly according to claim 20, **characterized in that** a distance between two adjacent water collection plates (81) is 20 mm to 50 mm.

23. The heat exchange assembly according to claim 19, **characterized in that** the water collector (8) comprises a plurality of water collection plates (81) which are arranged vertically and connected to each other, the water collection plates (81) are arranged at regular intervals around the center cylinder (3), and each passage (80) is formed between the surfaces of two adjacent water collection plates (81), sheets (811) extending upward protrude from the surface of each water collection plate (81), and, the water collector (8) has a plurality of collection channels (82) between the sheets (811) and the surface of each water collection plate (81) which open upward for collecting accumulated water on the surfaces of the water collection plates (81) above the sheets (811), each collection channel extends from an inner surface of the shell passage housing (1) to the center cylinder (3) along surfaces of the water collection plates (81);
the center cylinder (3) is a hollow tube with a lower end (31), and the lower end (31) communicates with the water collection tank (6), the center cylinder (3) has a water inlet (32) communicating with the collection channels (82) on a periphery of the center cylinder (3).

24. The heat exchange assembly according to claim 21, **characterized in that** the collection channels (82) are inclined downward from outside to inside.

25. The heat exchange assembly according to claim 21, **characterized in that** each water collection plate (81) is wave-shaped and has one or more protruded portions and one or more recesses, the water collection plate (81) has at least one collection channel (82) on each surface of each water collection plate (81), and the at least one collection channel (82) is located at the protruded portion of each water collection plate (81).

26. The heat exchange assembly according to claim 15, **characterized in that** the heat exchange tube (4) is a corrugated tube, and has one or more smooth tube sections (41) with smooth surfaces and one or more corrugated sections (42) with corrugated surfaces, the corrugated sections (42) and the smooth tube sections (41) are alternately arranged lengthwise of the heat exchange tube (4), and, the corrugated sections (42) are longer than the smooth tube sections (41);
or, the heat exchange tube (4) is a finned tube, and has one or more smooth tube sections with smooth surfaces and one or more finned sections with finned surfaces, the finned sections and the smooth tube sections are alternately arranged lengthwise of the heat exchange tube (4), and, the finned sections are longer than the smooth tube sections.

27. The heat exchange assembly according to claim 15, **characterized in that** the aforementioned two tube plates and two tube boxes (2) form one group, and at least two groups are arranged at regular intervals around the shell passage housing (1).

28. A heat exchange process using the heat exchange assembly according to any one of claims 1-27, **characterized in that** the heat exchange process has the following steps:
the hot high fraction gas with a pressure of 9 MPa to 11.5 MPa and a temperature of 230°C to 250°C output from the hot high pressure separation tank (700) enters the spiral heat exchange tube (120) of the first heat exchanger (100) through the tube passage inlet pipe (114), and the hydrogen with a pressure of 10 MPa to 12.5 MPa and a temperature of 70°C to 95°C and the raw oil with a pressure of 11 MPa to 13.5 MPa and a temperature of 130°C to 165°C enter the shell (110) through the first shell passage inlet pipe (111) and the second shell passage inlet pipe (112), respectively, so as to exchange heat with the hot high fraction gas in the spiral heat exchange tube (120), then a medium outputs from the shell passage outlet pipe (113) with a pressure of 9.7 MPa to 12.2 MPa and a temperature of 160°C to 180°C, and the weight percentage of the hydrogen in the medium is 6% to 12%.
